# EUROPEAN PATENT SPECIFICATION

(11) **EP 0 580 115 B1**
(45) Date of publication and mention of the grant of the patent: **22.01.1997**
(21) Application number: 93111578.6
(22) Date of filing: 20.07.1993
(51) Int. Cl.: A23G 9/22

(54) **Agitator, particularly for machine for making ice-cream or the like**
Rührer insbesondere für Speiseeismaschine und dergleichen
Agitateur en particulier pour machine à crème glacée et analogue

(30) Priority: 22.07.1992 IT GE920077
(43) Date of publication of application: 26.01.1994
(73) Proprietor: ALI S.p.A. - CARPIGIANI GROUP, 40011 Anzola Emilia (Bologna) (IT)
(72) Inventor: Cocchi, Gino, Bologna (IT)
(74) Representative: Porsia, Attilio, Dr.

(56) References cited:
- EP-A- 0 229 371
- EP-A- 0 386 323
- EP-A- 0 386 323
- GB-A- 999 332
- US-A- 1 685 189

## Description

The invention relates to an agitator, particularly for machines for making ice cream, or similar, and of the type comprising a plurality of radial paddle blades which are supported at equal angular intervals by a rotary drive shaft.

From EP-A- 0 386 323 a stirrer for ice cream making machines is known comprising a plurality of paddles constructed as helical fins, arranged radially and equally spaced apart angularly, connected to each other at their ends, respectively by means of a hub provided with a number of radial arms corresponding to the number of paddles of the stirrer, and having co-axially secured thereto a shaft section provided with a similar hub also provided with a corresponding number of radial arms.

From US-A-1 685 189 an ice cream freezer is known comprising a cylinder having end heads and a rotary dasher assembly longitudinally arranged within said cylinder, said assembly including longitudinal pivotally hung scrapers, which are accesible, removable and insertable through the front ends of the freezer.

The object of the invention is to provide an agitator of the aforesaid type, which may obviate to the drawbacks of the referred prior art agitators, which is of lower manufacturing costs, which will provide a considerable decrease in weight and consequent greater ease of handling, without in any way compromising the functional quality of the ice cream being worked.

According to one aspect of the invention the above object is achieved by providing an agitator for ice-cream making machines of the type comprising a plurality of radial paddle blades which are connected by their opposite ends at equal angular intervals to the free ends of radial arms secured to a rotary drive shaft section and to a connecting hub coaxial with the said drive shaft section, in which the said paddle blades are made of plastics material and in which the radial extension of the paddle blades is considerably larger than, and more than twice as great as, the radial extension of the said supporting arms.

From half to two thirds of the total radial extension of the agitator is constituted by the radial extension of the paddle blades.

The above description clearly demonstrates the constructional simplicity of the agitator according to the invention and its great economy. The fact that paddle blades of plastic material are specified and that these constitute the greater part of the agitator contributes to the achievement of a reduction of weight and greater ease of handling.

The invention also relates to other characteristics which further improve the agitator described above and which form the subject of the subsidiary claims.

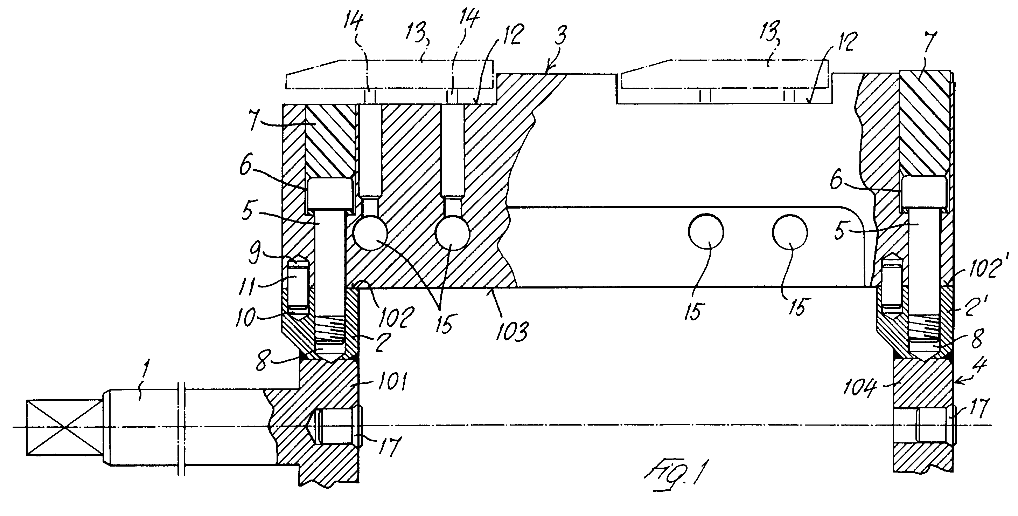

The characteristics of the invention and the advantages derived therefrom will be clearly understood from the description of a preferred embodiment, illustrated by way of example and non-restrictively in the attached drawings, in which
Fig. 1 shows a side view, partially in section, of half of an agitator according to the invention; and

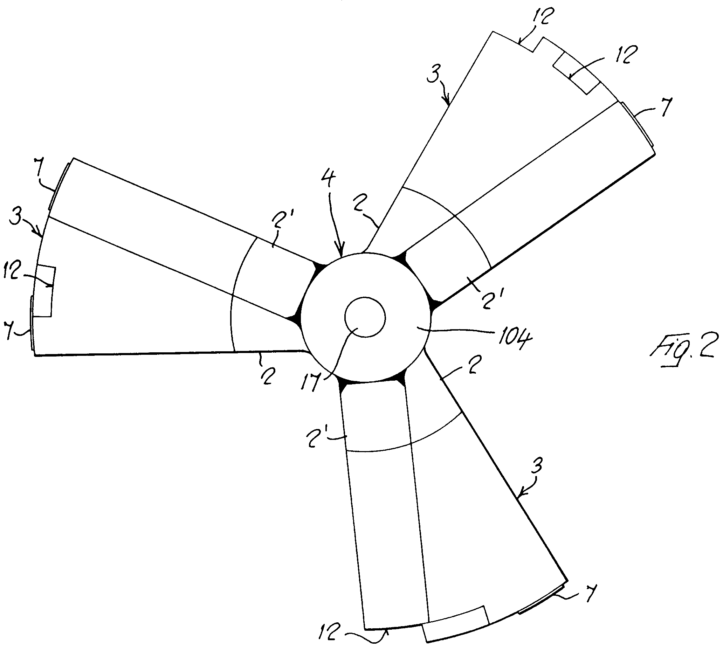

Fig. 2 is a view in the axial direction of the complete agitator according to the invention.

With reference to the figures, an agitator according to the invention comprises a drive shaft section 1 which carries at one end three short arms 2 distributed at equal angular intervals, a paddle blade 3 fixed to each arm 2 at one of its axial ends, and a hub 4 connecting the paddle blades 3 together at the axial end opposite the shaft section 1.

The paddle blades 3 are formed from plates of plastic material which are orientated substantially radially with respect to the axis of the drive shaft section 1 and which have a helical development. The connecting hub 4 also has three fixing arms 2' for the paddle blades 3.

The plates which form the paddle blades 3 are fixed by their radially inner sides 103 to the radially outer ends 102, 102' of the arms 2, 2'. Fixing is provided by radial bolts 5 which are enclosed within the thickness of the plates forming the blades 3 and whose heads are accessible through enlarged radial cavities 6. The cavities are open on the radially outer side of the plates and may be sealed with plugs of plastic material 7 which may be inserted by forcing, for example. The bolts 5 may be screwed into threaded radial holes 8 in the arms 2, 2'. On their facing contact ends 102, 102' and 103, the blades 3 and the arms 2, 2' have coinciding radial centring holes 9, 10 respectively in which centring pins 11 may be housed.

The radially outer working sides of the paddle blades 3 have radial recesses 12 in which scraper elements 13 are housed. The scraper elements 13 are supported by axially staggered parallel pairs of pins 14 in corresponding radial guide holes formed in the paddle blades 3. They are subjected to an radially outward elastic force by springs which are not illustrated in detail. The free ends of the supporting pins 14 terminate in housing slots 15 provided in the blades 3 for the application of locking elements to prevent extraction.

According to a further characteristic, the arms 2, 2' are fixed by welding to a cylindrical hub 101, 104, which has a central hole which may be sealed with a plug 17, for example and in particular one made of plastic material. In the case of the drive shaft section 1, the cylindrical hub 101 is fixed at the end of this section or is made in one piece with it.

Among the advantages of the invention, it will be evident that by using a reduced number of standard elements like the hubs 4, the radial arms 2 and the paddle blades 3, it is possible to assemble a great variety of agitators, differing by diameter, or by axial length, or by both said said parameters, or even by the number of paddle blades which may be assembled on the agitator.

## Claims

1. Agitator for ice-cream making machines of the type comprising a plurality of radial paddle blades (3) which are connected by their opposite ends at equal angular intervals to the free ends of radial arms (2, 2') secured to a rotary drive shaft section (1) and to a connecting hub (4) coaxial with the said drive shaft section (1), in which the said paddle blades (3) are made of plastics material and in which the radial extension of the paddle blades (3) is considerably larger than, and more than twice as great as, the radial extension of the said supporting arms (2, 2'), and from half to two thirds of the total radial extension of the agitator is constituted by the radial extension of the paddle blades (3).

2. Agitator according to Claim 1 or 2, characterized by the fact that the paddle blades (3) are formed from plates with a helical development disposed substantially radially with respect to the axis of rotation.

3. Agitator according to one or more of the preceding claims, characterized by the fact that the paddle blades (3) are fixable in a removable way to the radial arms (2,2') of the shaft section (1) and of the connecting hub (4).

4. Agitator according to one or more of the preceding claims, characterized by the fact that the paddle blades (3) are secured to the arms (2,2') by means of radial bolts (5) which are completely enclosed within the thickness of the plates forming the blades (3) and which are screwed into threaded radial holes (8) formed in the arms (2,2').

5. Agitator according to claim 5, characterized by the fact that the heads of the bolts (5) are accessible from the the radially outer side of the paddle blades (3) through radial cavities (6) which may be sealed with plugs (7).

6. Agitator according to claim 6, characterized by the fact that the plugs (7) are made of plastics material and may be inserted by forcing into the cavities (6)

7. Agitator according to one or more of the preceding claims, characterized by the fact that each paddle blade (3) carries one or more scraper elements (13) which are supported in such a way as to be urged under elastic pressure radially towards the exterior.

8. Agitator according to one or more of the preceding claims, characterized by the fact that the paddle blades (3) and the corresponding arms (2,2') are provided with complementary centering means (9,10,11).

9. Agitator according to claim 9, in which the said centering means comprises each a pair of coinciding radial holes (9,10) housing a centering pin (11).

## Patentansprüche

1. Rührer für Speiseeismaschinen eines Typs, enthaltend eine Vielzahl von radialen Schaufelblättern (3), die an ihren gegenüberliegenden Enden in gleichen Winkelintervallen mit den freien Enden von radialen Armen (2, 2') verbunden sind, die an einem Abschnitt (1) einer drehbaren Antriebswelle und mit einer verbindenden Nabe (4) koaxial mit dem besagten Abschnitt (1) der Antriebswelle gesichert sind, bei dem die besagten Schaufelblätter (3) aus Plastikmaterial hergestellt und bei dem der radiale Abstand der Schaufelblätter (3) wesentlich größer als, und mehr als zwei mal so groß, als der radiale Abstand der besagten unterstützenden Arme (2, 2') und von der Hälfte bis zu zwei Dritteln des gesamten radialen Abstandes des Rührers durch den radialen Abstand der Schaufelblätter (3) gebildet ist.

2. Rührer entsprechend Anspruch 1, **dadurch gekennzeichnet, daß** die Schaufelblätter (3) aus Platten mit einem schraubenförmigen Drall gebildet sind, die im wesentlichen radial in Bezug auf die Achse der Rotation angeordnet sind.

3. Rührer entsprehend einem oder mehreren der vorstehenden Ansprüche, **dadurch gekennzeichnet, daß** die Schaufelblätter (3) in einer entfernbaren Weise an den radialen Armen (2, 2') des Abschnittes (1) der Welle und an der verbindenden Nabe (4) befestigbar sind.

4. Rührer entsprechend einem oder mehreren der vorstehenden Ansprüche, **dadurch gekennzeichnet, daß** die Schaufelblätter (3) an den Armen (2, 2') mittels radial angeordneter Schrauben (5) festgelegt sind, die vollständig von der Dicke der Platten, die die Schaufeln (3) bilden, umschlossen sind und die in radiale, mit Gewinden versehene Löcher (8) eingeschraubt sind, die in den Armen (2, 2') gebildet sind.

5. Rührer entsprechend Anspruch 4, **dadurch gekennzeichnet, daß** die Köpfe der Schrauben (5) von der radialen äußeren Seite der Schaufelblätter (3) durch radiale Vertiefungen (6) zugänglich sind, die mittels Stopfen (7) abgedichtet sein können.

6. Rührer entsprechend Anspruch 5, **dadurch gekennzeichnet, daß** die Stopfen (7) aus Plastikmaterial gemacht sind und in die Vertiefungen (6) durch Hineindrücken eingefügt werden.

7. Rührer entsprechend einem oder mehreren der vorstehenden Ansprüche, **dadurch gekennzeichnet, daß** jedes Schaufelblatt (3) ein oder mehrere Kratzerelemente (13) trägt, die in einer derartigen Weise unterstützt sind, daß sie unter elastischem Druck radial nach außen gedrückt werden.

8. Rührer entsprechend einem oder mehreren der vorstehenden Ansprüche, **dadurch gekennzeichnet, daß** die Schaufelblätter (3) und die zugehörigen Arme (2, 2') mit einander entsprechenden Zentriermitteln (9, 10, 11) ausgestattet sind.

9. Rührer entsprechend Anspruch 8, bei dem die besagten Zentriermittel ein Paar von übereinstimmenden radialen Bohrungen (9, 10) enthalten, die einen Zentrierstift (11) aufnehmen.

## Revendications

1. Agitateur pour des machines à fabriquer de la crème glacée du genre qui comporte une pluralité de pales (3) de mélange radiales qui sont connectées par leur extrémité opposée à des intervalles angulaires réguliers aux extrémités libres de bras (2, 2') radiaux fixés à une section (1) d'arbre d'entraînement en rotation et à un moyeu (4) de connexion qui est coaxial à la section (1) d'arbre d'entraînement, dans lequel les pales (3) de mélange sont en une matière plastique et dans lequel le prolongement radial des pales (3) de mélange est beaucoup plus grand que le prolongement radial des bras (2, 2') de support, et ce plus de deux fois plus grand, et entre la moitié et deux tiers du prolongement radial total de l'agitateur est constituée par le prolongement radial des pales (3) de mélange.

2. Agitateur suivant la revendication 1, caractérisé par le fait que les pales (3) de mélange sont formées par des plaques ayant un développement en hélice disposées sensiblement radialement par rapport à l'axe de rotation.

3. Agitateur suivant l'une ou plusieurs des revendications précédentes, caractérisé par le fait que les pales (3) de mélange peuvent être fixées d'une manière qui peut être détachée aux bras (2, 2') radiaux de la section (1) d'arbre et du moyeu (4) de connexion.

4. Agitateur suivant l'une ou plusieurs des revendications précédentes, caractérisé par le fait que les pales (3) de mélange sont fixées aux bras (2, 2') au moyen de boulons (5) radiaux qui sont complètement enfermés à l'intérieur de l'épaisseur des plaques formant les pales (3) et qui sont vissés dans des trous (8) radiaux taraudés ménagés dans les bras (2, 2').

5. Agitateur suivant la revendication 4, caractérisé par le fait que l'on accède aux têtes des boulons (5) à partir du côté extérieur radialement des pales (3) de mélange par l'intermédiaire de cavités (6) radiales qui peuvent être bouchées de manière étanche par des bouchons (7).

6. Agitateur suivant la revendication 5, caractérisé par le fait que les bouchons (7) sont en matière plastique et peuvent être insérés par force dans les cavités (6).

7. Agitateur suivant l'une ou plusieurs des revendications précédentes, caractérisé par le fait que chaque pale (3) de mélange porte un ou plusieurs éléments (13) racleurs qui sont supportés d'une manière telle qu'ils sont poussés sous pression élastique radialement vers l'extérieur.

8. Agitateur suivant l'une ou plusieurs des revendications précédentes, caractérisé par le fait que les lames (3) de mélange et les bras (2, 2') correspondants sont munis de moyens (9, 10, 11) de centrage complémentaires.

9. Agitateur suivant la revendication 8, dans lequel les moyens de centrage comportent chacun une paire de trous (9, 10) radiaux coïncident logeant une broche (11) de centrage.
